# EUROPEAN PATENT SPECIFICATION

(11) **EP 4 169 700 B1**
(45) Date of publication and mention of the grant of the patent: **07.10.2026**
(21) Application number: 20968023.0
(22) Date of filing: 28.12.2020
(51) Int. Cl.: B29C 65/14, B29C 65/18, B29C 65/26, B29C 65/30, B29C 65/72, B29C 65/78

(54) **COMPOSITE MATERIAL BONDING APPARATUS AND METHOD**
VORRICHTUNG UND VERFAHREN ZUM VERBINDEN VON VERBUNDMATERIAL
APPAREIL ET PROCÉDÉ DE LIAISON DE MATÉRIAU COMPOSITE

(43) Date of publication of application: 26.04.2023
(73) Proprietor: Mitsubishi Heavy Industries, Ltd., Tokyo 100-8332 (JP)
(72) Inventor: MORIYA, Makoto, Tokyo 100-8332 (JP); ISHIDA, Makoto, Tokyo 100-8332 (JP); OTOBE, Shogo, Tokyo 100-8332 (JP); TERASAKA, Akihiro, Tokyo 100-8332 (JP)
(74) Representative: Hoffmann Eitle
(86) International application number: PCT/JP2020/049237
(87) International publication number: WO 2022/145012

(56) References cited:
- EP-A1- 2 578 381
- WO-A1-2016/102292
- CN-A- 106 785 232
- CN-A- 106 785 232
- JP-A- 2007 245 458
- JP-A- 2012 232 564
- JP-A- 2017 205 960
- JP-A- 2017 205 960

## Description

### Technical Field

The present disclosure relates to a composite material bonding apparatus and a composite material bonding method for bonding composite members to each other, each containing fibers and a resin.

### Background Art

As a structural member for an aircraft or the like, a composite member containing fibers and a thermoplastic resin is used. When a plurality of composite members are bonded to each other, a bonding method has been known in which bonding surfaces are heated and melted and then the composite members are overlapped and bonded to each other (JP 3859321 B2). JP 3859321 B2 discloses that bonding surfaces of composite members are melted by an infrared heater provided in a heating furnace, the composite members are moved to a pressurization-bonding forming device, and then the bonding surfaces are overlapped and bonded to each other.

JP 2017 205960 A, JP 2012 232564 A, EP 2 578 381 A1 and WO 2016/102292 A1 disclose a composite material bonding apparatus with the pre-characterizing features of claim 1 as well as a related bonding method.

Another composite material bonding apparatus is known from CN 106785232 A.

### Summary of Invention

### Technical Problem

However, since the bonding method disclosed in JP 3859321 B2 requires a step of conveying the composite members to the pressurization-bonding forming device after melting, cycle time increases, which is a problem.

In addition, since the bonding surfaces are heated using the infrared heater, there is a limit to temperature rising rate, and it is difficult to further shorten cycle time.

The present disclosure is conceived in view of such circumstances, and an object of the present disclosure is to provide a composite material bonding apparatus and a composite material bonding method capable of shortening cycle time when composite members are bonded to each other. Solution to Problem

This object is solved by a composite material bonding apparatus with the features of claim 1 and a composite material bonding method with the features of claim 8. Preferred embodiments follow from the other claims.

### Advantageous Effects of Invention

It is possible to shorten cycle time when composite members are bonded to each other.

### Brief Description of Drawings

Fig. 1 is a cross-sectional view showing a composite material bonding apparatus according to one aspect of the present disclosure.
Fig. 2 is a longitudinal sectional view showing a layer configuration of a graphite heater.
Fig. 3 is a plan view schematically showing the graphite heater.
Fig. 4 is a cross-sectional view of the composite material bonding apparatus showing a state where the graphite heater is located at a retract position.
Fig. 5 is a cross-sectional view of the composite material bonding apparatus showing a heating step using the graphite heater.
Fig. 6 is a cross-sectional view of the composite material bonding apparatus showing a state where the graphite heater is retracted from an insertion position to the retract position.
Fig. 7 is a cross-sectional view of the composite material bonding apparatus showing a state where pressurization is performed by a pressurizing plate.
Fig. 8 is a cross-sectional view of the composite material bonding apparatus showing a state where the pressurizing plate is separated from a first composite member after bonding.
Fig. 9 is a cross-sectional view of a composite material bonding apparatus according to a modification example.

### Description of Embodiments

Hereinafter, one embodiment according to the present disclosure will be described with reference to the drawings.

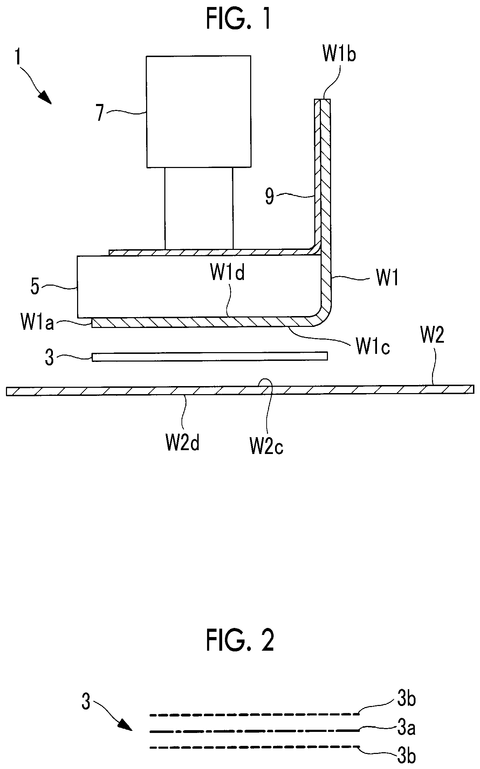

Fig. 1 shows a schematic configuration of a composite material bonding apparatus 1 according to the present embodiment. The composite material bonding apparatus 1 is used to bond a first composite member W1 and a second composite member W2 to each other.

The composite members W1 and W2 are made of a composite material containing a resin and fibers such as carbon fibers. The composite members W1 and W2 can be used as, for example, a structural member for an aircraft, a ship, a vehicle, or the like. The composite members W1 and W2 have already been shaped and solidified.

A thermoplastic resin is preferably used for the composite members W1 and W2. Examples of the composite material used for the composite members W1 and W2 include carbon fiber reinforced plastic (CFRP), glass fiber reinforced plastic (GFRP), aramid fiber reinforced plastic (AFRP), and the like.

The first composite member W1 includes a bottom portion W1a and a side portion W1b standing from one side of the bottom portion W1a, and has an L-shaped cross section. The first composite member W1 is a long member extending in a direction perpendicular to the paper surface of Fig. 1. A first bonding surface W1c that is a lower surface of the bottom portion W1a of the first composite member W1 is bonded to a second bonding surface W2c that is an upper surface of the second composite member W2.

The second composite member W2 is a long plate extending in the direction perpendicular to the paper surface of Fig. 1. A second back surface W2d that is a lower surface of the second composite member W2 is installed on a table (not shown).

The composite material bonding apparatus 1 includes a graphite heater (sheet heater) 3, a pressurizing plate (pressurizing means) 5, a pressurizing actuator (pressurizing means) 7, and a component holding stay (approaching and separating device) 9.

As shown in Fig. 2, the graphite heater 3 has a structure in which a heat generating unit 3a made of graphite and insulating layers 3b are integrated with a front surface and a back surface of the heat generating unit 3a sandwiched between the insulating layers 3b. In the graphite heater 3, a thickness of a main portion of the graphite heater 3 is, for example, 0.2 mm or more and 0.5 mm or less. However, although not shown, a frame, a rigid layer, or the like is appropriately provided to maintain a plate shape of the graphite heater 3.

As shown in Fig. 1, the graphite heater 3 has a width substantially equal to or larger than or equal to a width (dimension in a horizontal direction in the same drawing) of the first bonding surface W1c. An area of a surface of the graphite heater 3 facing the bonding surfaces W1c and W2c is equal to or larger than or equal to an area of each of the bonding surfaces W1c and W2c. Accordingly, the entirety of both the bonding surfaces W1c and W2c can be uniformly heated in a short time.

The graphite heater 3 is connected to a graphite heater moving device (sheet heater moving device) (not shown). As shown in Fig. 1, the graphite heater moving device moves the graphite heater 3 between an insertion position between the first bonding surface W1c of the first composite member W1 and the second bonding surface W2c of the second composite member W2 and a retract position where the graphite heater 3 is retracted sideways from the insertion position.

As shown in Fig. 2, the heat generating unit 3a of the graphite heater 3 is made of graphite. The graphite can be obtained, for example, by sintering polyimide films. A short heating time and a high reaching temperature can be realized by using graphite for the heat generating unit 3a. For example, the heat generating unit 3a can reach 1300°C in a heating time of approximately 0.2 seconds.

The insulating layers 3b are made of a material having electrical insulation, and for example, a resin having heat resistance, preferably a polyimide film is used. In addition, heat-resistant glass having heat resistance around 1000°C may be used.

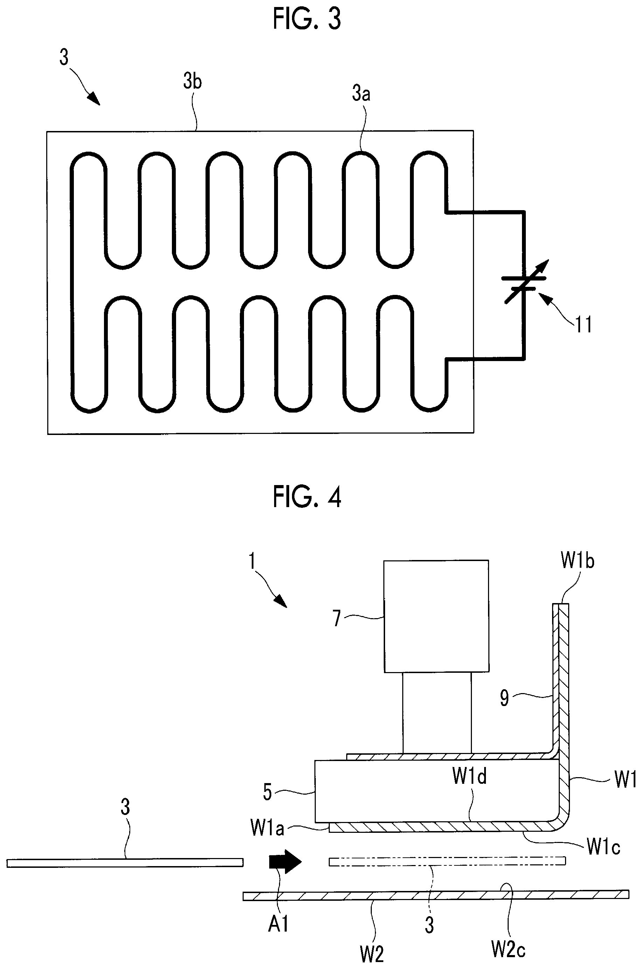

Fig. 3 schematically shows the graphite heater 3 having a planar shape. Each of the insulating layers 3b has a rectangular shape. In the heat generating unit 3a, one wire-shaped unit is disposed in a meandering and folding manner, so as to be provided over the entire surface of the insulating layer 3b having a rectangular shape. Both end portions of the heat generating unit 3a are connected to a direct power supply 11 with variable current and/or voltage. The direct power supply is controlled by a control unit (not shown).

The control unit includes, for example, a central processing unit (CPU), a random access memory (RAM), a read only memory (ROM), a computer-readable storage medium, and the like. Furthermore, as one example, a series of processing for realizing various functions are stored in the storage medium or the like in the form of a program, and the CPU realizes the various functions by reading the program into the RAM or the like, and by executing information processing and arithmetic processing. Incidentally, a form in which the program is installed in the ROM or in other storage media in advance, a form in which the program is stored and provided in the computer-readable storage medium, a form in which the program is distributed via wired or wireless communication means, and the like may be applied. Examples of the computer-readable storage medium include magnetic disks, magnetooptical disks, CD-ROMs, DVD-ROMs, semiconductor memories, and the like.

The pressurizing plate 5 is, for example, a rectangular parallelepiped body made of metal, and is disposed such that a lower surface of the pressurizing plate 5 is in contact with a first back surface W1d that is an upper surface of the first composite member W1. The pressurizing actuator 7 is fixed to an upper portion of the pressurizing plate 5. The pressurizing plate 5 has predetermined rigidity to uniformly transmit a pressurizing force of the pressurizing actuator 7 to the first composite member W1.

The pressurizing actuator 7 applies a predetermined pressurizing force to the first composite member W1 via the pressurizing plate 5 according to a command from the control unit. As a driving force of the pressurizing actuator 7, an electric motor, air pressure, hydraulic pressure, or the like is used.

The component holding stay 9 holds the first composite member W1, and causes the first composite member W1 to approach and separate from the second composite member W2. The component holding stay 9 can hold the side portion W1b of the first composite member W1, for example, through vacuum suctioning. The pressurizing plate 5 and the pressurizing actuator 7 move up and down with operation of the component holding stay 9.

Next, an operation of the composite material bonding apparatus 1 described above will be described.

First, as shown in Fig. 4, the first composite member W1 is suctioned and held by the component holding stay 9, and a predetermined spacing is provided between the first bonding surface W1c of the first composite member W1 and the second bonding surface W2c of the second composite member W2 with the first bonding surface W1c and the second bonding surface W2c facing each other. The pressurizing plate 5 is disposed to be in contact with an upper surface of the bottom portion W1a of the first composite member W1. At this time, the graphite heater 3 is located at the retract position where the graphite heater 3 is retracted sideways from the insertion position between the first bonding surface W1c and the second bonding surface W2c.

Then, the graphite heater 3 is moved in a lateral direction as indicated by arrow A1 by the graphite heater moving device (not shown). Accordingly, the graphite heater 3 is located at the insertion position between the first bonding surface W1c and the second bonding surface W2c, as indicated by a chain double-dashed line. At this time, an upper surface and a lower surface of the graphite heater 3 are disposed at positions to be parallel to the first bonding surface W1c and to the second bonding surface W2c facing each other, and to cover entireties thereof.

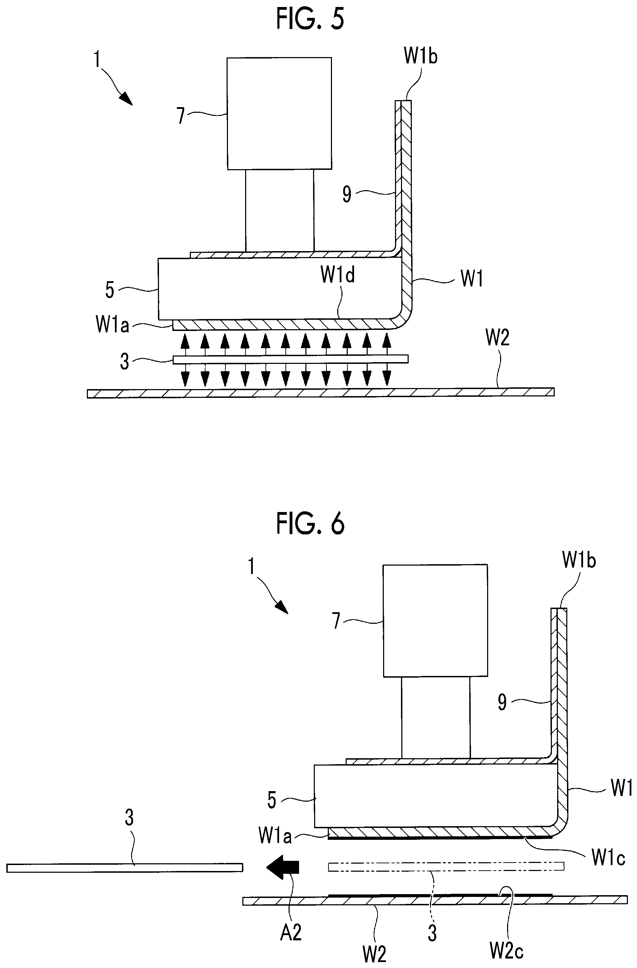

In a state where the graphite heater 3 is located at the insertion position, the graphite heater 3 generates heat according to a command from the control unit. The heat to be generated from the graphite heater 3 is generated from both the upper and lower surfaces of the graphite heater 3, and heats the first bonding surface W1c and the second bonding surface W2c facing each other, as indicated by arrows in Fig. 5 (heating step). Accordingly, the resin located on the first bonding surface W1c and on the second bonding surface W2c are melted. Incidentally, heating may be performed by radiant heat in a state where the graphite heater 3 and each of the first bonding surface W1c and the second bonding surface W2c are spaced apart from each other as shown in Fig. 5, or heating may be performed by heat conduction in a state where the graphite heater 3 and each of the first bonding surface W1c and the second bonding surface W2c are in contact with each other.

A heating time and an output (current and/or voltage) of the graphite heater 3 are determined in advance according to the first composite member W1 and to the second composite member W2 to be heated, and are stored in, for example, a storage unit of the control unit.

When the heating by the graphite heater 3 is completed, as indicated by arrow A2 of Fig. 6, the graphite heater 3 is moved from the insertion position to the retract position by the graphite heater moving device (retracting step).

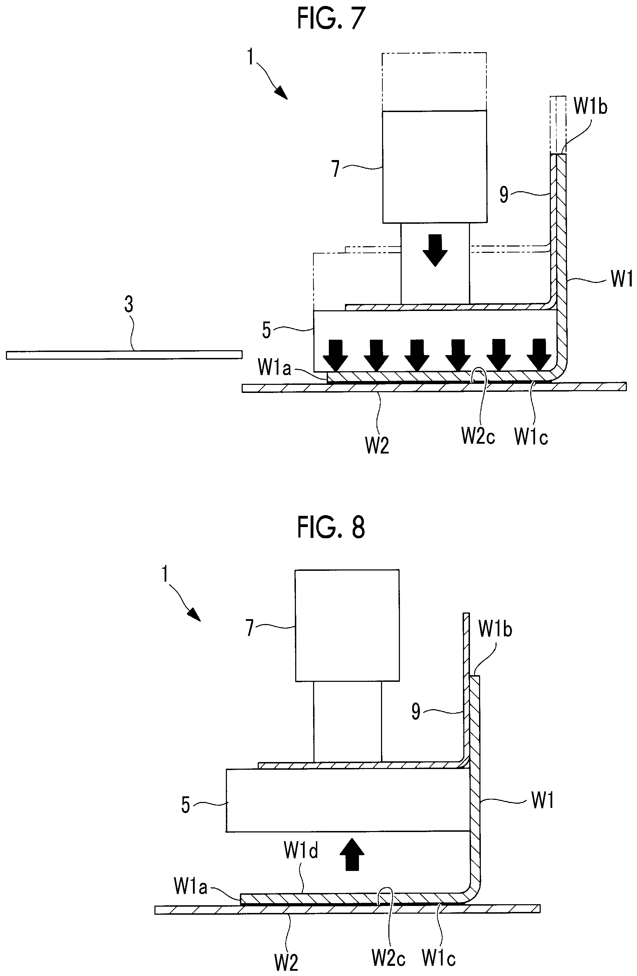

Next, as shown in Fig. 7, while the first bonding surface W1c and the second bonding surface W2c are melted (namely, before solidification), the first composite member W1 is lowered by the component holding stay 9 to bring the first bonding surface W1c and the second bonding surface W2c into contact with each other. Then, the pressurizing actuator 7 is operated according to a command from the control unit to press the pressurizing plate 5 downward and to hold the pressurizing plate 5 for a certain time while pressurizing the bottom portion W1a of the first composite member W1 against the second composite member W2 (bonding step). Accordingly, the first composite member W1 and the second composite member W2 are bonded to each other at the bonding surfaces W1c and W2c. Temperatures on the bonding surfaces W1c and W2c during the bonding step can be adjusted by heat dissipation using a heat capacity of the pressurizing plate 5.

Thereafter, as shown in Fig. 8, after the pressurization by the pressurizing actuator 7 is released, the component holding stay 9 is raised with the suctioning of the first composite member W1 by the component holding stay 9 released. Accordingly, the pressurizing plate 5 is separated from the first back surface W1d of the first composite member W1.

In such a manner, the predetermined step of bonding the first bonding surface W1c and the second bonding surface W2c to each other is completed. When another first bonding surface W1c and another second bonding surface W2c in a longitudinal direction of the first composite member W1 and the second composite member W2 are next bonded to each other, a transfer device that moves a relative position of the graphite heater 3 with respect to the first composite member W1 and to the second composite member W2 locates the graphite heater 3 at a different position corresponding to the first bonding surface W1c and to the second bonding surface W2c. In this case, the graphite heater 3 may be transferred, or the first composite member W1 and the second composite member W2 may be transferred.

The actions and effects of the present embodiment described above are as follows.

The first bonding surface W1c and the second bonding surface W2c can be uniformly heated simultaneously in a short time by locating the graphite heater 3 at the insertion position and by disposing the graphite heater 3 to be parallel to the first bonding surface W1c and to the second bonding surface W2c. Then, the first bonding surface W1c and the second bonding surface W2c can be brought into contact with and bonded to each other by retracting the graphite heater 3 to the retract position. In such a manner, the graphite heater 3 is moved between the insertion position and the retract position to heat the first bonding surface W1c and the second bonding surface W2c facing each other, and the first bonding surface W1c and the second bonding surface W2c can be immediately bonded to each other by retracting the graphite heater 3 after heating, so that cycle time can be shortened.

Since the first bonding surface W1c and the second bonding surface W2c are pressurized after the graphite heater 3 is retracted from the insertion position to the retract position, pressurization bonding can be immediately performed after the retraction of the graphite heater 3, and cycle time can be shortened.

Since the pressurizing plate 5 is provided to be in contact with the first back surface W1d and/or with the second back surface W2d, the first bonding surface W1c and the second bonding surface W2c can be uniformly pressurized.

The graphite heater 3 is provided over one direction (left-right width direction in Fig. 1) of the first bonding surface W1c and the second bonding surface W2c. Accordingly, heating can be performed at once in a range in the width direction of the first bonding surface W1c and the second bonding surface W2c.

Heating is performed using the graphite heater 3. Namely, the graphite heater 3 is structured to include the heat generating unit 3a made of graphite, and the insulating layers 3b that sandwich and fix the heat generating unit 3a. A short heating time and a high reaching temperature can be realized by using graphite for the heat generating unit 3a.

The present embodiment described above can be modified as follows.

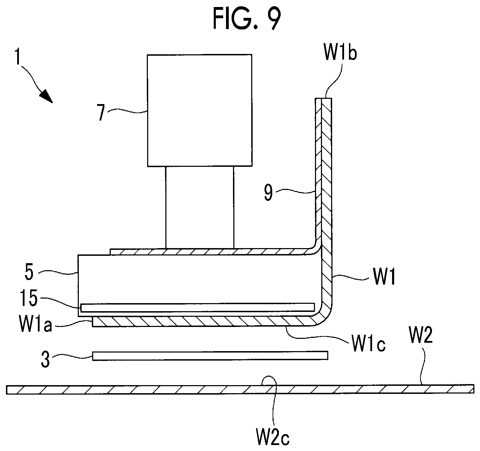

In the embodiment, the temperatures of the bonding surfaces W1c and W2c during the bonding step are adjusted by heat dissipation using the heat capacity of the pressurizing plate 5, but as shown in Fig. 9, the pressurizing plate may be provided with a temperature adjustment unit 15 that performs heating and/or cooling. A temperature of the temperature adjustment unit 15 is controlled by the control unit. As the temperature adjustment unit 15, an electric heater, a heat medium flow path through which a heating medium flows, or the like can be used for heating. In addition, a cooling element such as a Peltier element, a heat medium flow path through which a cooling medium flows, or the like can be used for cooling.

Since the temperature adjustment unit 15 is provided on the pressurizing plate 5, the bonding surfaces W1c and W2c can be heated and/or cooled by the pressurizing plate 5. Accordingly, a predetermined temperature suitable for bonding the bonding surfaces W1c and W2c to each other can be maintained during the bonding step, and proper bonding can be realized.

In addition, in the present embodiment, a case has been described in which the first composite member W1 having an L-shaped cross section and the second composite member W2 having a plate shape are bonded to each other, but the present disclosure is not limited to the shapes of the composite members, and can be widely used when composite members are connected to each other.

In addition, in the present embodiment, the graphite heater 3 is used, but an electric heater having a planar shape such as a stainless steel sheet heater may be used instead of the graphite heater 3.

In addition, in the present embodiment, a configuration has been employed in which the first composite member W1 is moved to approach and separate from the second composite member W2 that is fixed, but the present disclosure is not limited to the configuration, and the first composite member W1 may be fixed and the second composite member W2 may be moved, or both the first composite member W1 and the second composite member W2 may be moved.

The composite material bonding apparatus and the composite material bonding method described above in each of the embodiments are understood, for example, as follows.

A composite material bonding apparatus (1) according to one aspect of the present disclosure includes: a sheet heater (3) having a planar shape; a sheet heater moving device that locates the sheet heater at an insertion position between a first bonding surface (W1c) of a first composite member (W1) and a second bonding surface (W2c) of a second composite member (W2) facing the first bonding surface, so as to be parallel to the first bonding surface and to the second bonding surface, and that retracts the sheet heater to a retract position to be retracted from the insertion position; and a control unit that controls the sheet heater moving device. The control unit causes the sheet heater to heat the first bonding surface and the second bonding surface at the insertion position, and then causes the sheet heater moving device to move the sheet heater to the retract position.

The first bonding surface and the second bonding surface can be uniformly heated simultaneously in a short time by locating the sheet heater at the insertion position and by disposing the sheet heater to be parallel to the first bonding surface and to the second bonding surface. Then, the first bonding surface and the second bonding surface can be brought into contact with and bonded to each other by retracting the sheet heater to the retract position. In such a manner, the sheet heater is moved between the insertion position and the retract position to heat the first bonding surface and the second bonding surface facing each other, and the first bonding surface and the second bonding surface can be immediately bonded to each other by retracting the sheet heater after heating, so that cycle time can be shortened.

The sheet heater and the first bonding surface and/or the second bonding surface may be in contact with or separated from each other at the insertion position.

Further, the composite material bonding apparatus according to one aspect of the present disclosure further includes pressurizing means (5 and 7) for pressurizing the first composite member and/or the second composite member in a direction in which the first bonding surface and the second bonding surface approach each other. After the sheet heater is retracted from the insertion position to the retract position, the control unit causes the pressurizing means to pressurize the first bonding surface and the second bonding surface.

Since the first bonding surface and the second bonding surface are pressurized after the sheet heater is retracted from the insertion position to the retract position, pressurization bonding can be immediately performed after the retraction of the sheet heater, and cycle time can be shortened.

Further, the composite material bonding apparatus according to one aspect of the present disclosure further includes an approaching and separating device (9) that causes the first bonding surface and the second bonding surface to approach and separate from each other. After the first bonding surface and the second bonding surface are pressurized by the pressurizing means, the control unit causes the approaching and separating device to separate the first bonding surface and the second bonding surface from each other.

Since the first bonding surface and the second bonding surface are separated from each other after pressurization, the process can quickly proceed to the next step.

Further, the composite material bonding apparatus according to one aspect of the present disclosure further includes a transfer device that moves a relative position of the sheet heater with respect to the first composite member and to the second composite member. After the first bonding surface and the second bonding surface are separated from each other by the approaching and separating device, the control unit causes the transfer device to move a relative position between the sheet heater and each of the first composite member and the second composite member, and causes the transfer device to move the sheet heater to the insertion position between the first bonding surface and the second bonding surface that is a position different from a position of the first bonding surface and the second bonding surface that are pressurized.

The transfer device moves the relative position between the sheet heater and each of the first composite member and the second composite member, and moves the sheet heater to the insertion position between the first bonding surface and the second bonding surface that is a position different from the position of the first bonding surface and the second bonding surface that are pressurized. Accordingly, the bonding surfaces can be sequentially bonded to each other at different positions.

Further, in the composite material bonding apparatus according to one aspect of the present disclosure, the pressurizing means includes a pressurizing plate (5) provided to be in contact with a first back surface of the first composite member that is a back surface side of the first bonding surface and/or with a second back surface of the second composite member that is a back surface side of the second bonding surface.

Since the pressurizing plate is provided to be in contact with the first back surface and/or with the second back surface, the first bonding surface and the second bonding surface can be uniformly pressurized.

Further, in the composite material bonding apparatus according to one aspect of the present disclosure, the pressurizing plate includes a temperature adjustment unit (15) that performs heating and/or cooling.

Since the temperature adjustment unit is provided on the pressurizing plate, the bonding surfaces can be heated and/or cooled by the pressurizing plate. Accordingly, a predetermined temperature can be maintained during pressurization, and proper bonding can be realized.

Further, in the composite material bonding apparatus according to one aspect of the present disclosure, the sheet heater is provided over a predetermined one direction of the first bonding surface and the second bonding surface.

The sheet heater is provided over one direction of the first bonding surface and the second bonding surface. Accordingly, heating can be uniformly performed in a range in the one direction of the first bonding surface and the second bonding surface. For example, when the first composite member and/or the second composite member is long, heating can be performed at once in a width direction (one direction).

The sheet heater includes a heat generating unit (3a) made of graphite, and insulating layers (3b) that sandwich and fix the heat generating unit.

The sheet heater is a graphite heater. Namely, the sheet heater is structured to include the heat generating unit made of graphite, and the insulating layers that sandwich and fix the heat generating unit. A short heating time and a high reaching temperature can be realized by using graphite for the heat generating unit. For example, the heat generating unit made of graphite can reach 1300°C in a heating time of approximately 0.2 seconds.

A composite material bonding method according to one aspect of the present disclosure includes: a heating step of locating a sheet heater having a planar shape at an insertion position between a first bonding surface of a first composite member and a second bonding surface of a second composite member facing the first bonding surface, so as to be parallel to the first bonding surface and to the second bonding surface, and of causing the sheet heater to heat the first bonding surface and the second bonding surface; a retracting step of retracting the sheet heater to a retract position to be retracted from the insertion position; and a bonding step of causing the first bonding surface and the second bonding surface to approach each other, and of bonding the first bonding surface and the second bonding surface to each other.

### Reference Signs List

1 composite material bonding apparatus
3 graphite heater (sheet heater)
3a heat generating unit
3b insulating layer
5 pressurizing plate (pressurizing means)
7 pressurizing actuator (pressurizing means)
9 component holding stay (approaching and separating device)
11 direct power supply
15 temperature adjustment unit
W1 first composite member
W1a bottom portion
W1b side portion
W1c first bonding surface
W1d first back surface
W2 second composite member
W2c second bonding surface
W2d second back surface

## Claims

1. A composite material bonding apparatus (1) comprising:
a sheet heater (3) having a planar shape;
a sheet heater moving device that is configured to locate the sheet heater (3) at an insertion position between a first bonding surface (W1c) of a first composite member (W1) and a second bonding surface (W2c) of a second composite member (W2) facing the first bonding surface (W1c), so as to be parallel to the first bonding surface (W1c) and to the second bonding surface (W2c), and that is configured to retract the sheet heater (3) to a retract position to be retracted from the insertion position; and
a control unit that controls the sheet heater moving device,
wherein the control unit is configured to cause the sheet heater (3) to heat the first bonding surface (W1c) and the second bonding surface (W2c) at the insertion position, and then to cause the sheet heater moving device to move the sheet heater (3) to the retract position,
**characterized in that**
the sheet heater (3) includes a heat generating unit (3a) made of graphite, and insulating layers (3b) that sandwich and fix the heat generating unit (3a).

2. The composite material bonding apparatus according to Claim 1, further comprising:
pressurizing means (5) for pressurizing the first composite member (W1) and/or the second composite member (W2) in a direction in which the first bonding surface (W1c) and the second bonding surface (W2c) approach each other,
wherein after the sheet heater (3) is retracted from the insertion position to the retract position, the control unit causes the pressurizing means (5) to pressurize the first bonding surface (W1c) and the second bonding surface (W2c).

3. The composite material bonding apparatus according to Claim 2,
wherein the pressurizing means (5) includes a pressurizing plate provided to be in contact with a first back surface (W1d) of the first composite member (W1) that is a back surface side of the first bonding surface (W1c),
wherein the composite material bonding apparatus further comprises an approaching and separating device (9) that is configured to cause the first bonding surface (W1c) and the second bonding surface (W2c) to approach each other and separate the the first back surface (W1d), and
wherein the control unit is configured such that, after the first bonding surface and the second bonding surface are pressurized by the pressurizing means (5), the control unit causes the approaching and separating device (9) to separate the pressurizing plate from the first back surface (W1d).

4. The composite material bonding apparatus according to Claim 3, further comprising:
a transfer device that is configured to move a relative position of the sheet heater (3) with respect to the first composite member (W1) and to the second composite member (W2),
wherein the control unit is configured such that, after the pressurizing plate is separated from the first back surface (W1d) by the approaching and separating device (9), the control unit is configured to cause the transfer device to move a relative position between the sheet heater (3) and each of the first composite member (W 1) and the second composite member (W2), and to cause the transfer device to move the sheet heater (3) to the insertion position between the first bonding surface (W1c) and the second bonding surface (W2c) that is a position different from a position of the first bonding surface (W1c) and the second bonding surface (W2c) that are pressurized.

5. The composite material bonding apparatus according to Claim 2,
wherein the pressurizing means (5) includes a pressurizing plate provided to be in contact with a first back surface (W1d) of the first composite member (W1) that is a back surface side of the first bonding surface (W1c) and/or with a second back surface (W2d) of the second composite member (W2) that is a back surface side of the second bonding surface (W2c).

6. The composite material bonding apparatus according to any one of Claims 3 to 5,
wherein the pressurizing plate (5) includes a temperature adjustment unit (15) that is configured to perform heating and/or cooling.

7. The composite material bonding apparatus according to any one of Claims 1 to 6,
wherein the sheet heater (3) is provided over a predetermined one direction of the first bonding surface (W1c) and the second bonding surface (W2c).

8. A composite material bonding method comprising: a heating step of locating a sheet heater (3) having a planar shape at an insertion position between a first bonding surface (W1c) of a first composite member (W1) and a second bonding surface (W2c) of a second composite member (W2) facing the first bonding surface (W1c), so as to be parallel to the first bonding surface (W1c) and to the second bonding surface (W2c), and of causing the sheet heater (3) to heat the first bonding surface (W1c) and the second bonding surface (W2c);
a retracting step of retracting the sheet heater (3) to a retract position to be retracted from the insertion position; and
a bonding step of causing the first bonding surface (W1c) and the second bonding surface (W2c) to approach each other, and of bonding the first bonding surface (W1c) and the second bonding surface (W2c) to each other, wherein
the sheet heater (3) includes a heat generating unit (3a) made of graphite, and insulating layers (3b) that sandwich and fix the heat generating unit (3a).

## Patentansprüche

1. Vorrichtung (1) zum Verbinden von Verbundmaterial, umfassend:
ein Flächenheizelement (3), das eine ebene Form aufweist;
eine Bewegungseinrichtung für das Flächenheizelement, die ausgebildet ist, das Flächenheizelement (3) an einer Einschubposition zwischen einer ersten Verbindungsfläche (W1c) eines ersten Verbundbauteils (W1) und einer zweiten Verbindungsfläche (W2c) eines zweiten Verbundbauteils (W2), die der ersten Verbindungsfläche (W1c) zugewandt ist, so anzuordnen, dass es parallel zu der ersten Verbindungsfläche (W1c) und zu der zweiten Verbindungsfläche (W2c) ist, und die ausgebildet ist, das Flächenheizelement (3) in eine Rückzugsposition zurückzuziehen, um aus der Einschubposition zurückgezogen zu werden; und
eine Steuereinheit, die die Bewegungseinrichtung für das Flächenheizelement steuert,
wobei die Steuereinheit ausgebildet ist, zu veranlassen, dass das Flächenheizelement (3) die erste Verbindungsfläche (W1c) und die zweite Verbindungsfläche (W2c) an der Einschubposition erhitzt, und dann zu veranlassen, dass die Bewegungseinrichtung für das Flächenheizelement das Flächenheizelement (3) in die Rückzugsposition bewegt,
**dadurch gekennzeichnet, dass**
das Flächenheizelement (3) eine Wärmeerzeugungseinheit (3a) aus Graphit und Isolierschichten (3b), die die Wärmeerzeugungseinheit (3a) zwischen sich aufnehmen und fixieren, einschließt.

2. Vorrichtung zum Verbinden von Verbundmaterial nach Anspruch 1, weiter umfassend:
Druckbeaufschlagungsmittel (5) zum Beaufschlagen des ersten Verbundbauteils (W1) und/oder des zweiten Verbundbauteils (W2) mit Druck in einer Richtung, in der sich die erste Verbindungsfläche (W1c) und die zweite Verbindungsfläche (W2c) einander annähern,
wobei, nachdem das Flächenheizelement (3) von der Einschubposition in die Rückzugsposition zurückgezogen worden ist, die Steuereinheit veranlasst, dass die Druckbeaufschlagungsmittel (5) die erste Verbindungsfläche (W1c) und die zweite Verbindungsfläche (W2c) mit Druck beaufschlagen.

3. Vorrichtung zum Verbinden von Verbundmaterial nach Anspruch 2,
wobei die Druckbeaufschlagungsmittel (5) eine Druckbeaufschlagungsplatte einschließen, die vorgesehen ist, mit einer ersten Rückfläche (W1d) des ersten Verbundbauteils (W1), die eine Rückflächenseite der ersten Verbindungsfläche (W1c) ist, in Kontakt zu sein,
wobei die Vorrichtung zum Verbinden von Verbundmaterial weiter eine Annäherungs- und Trenneinrichtung (9) umfasst, die ausgebildet ist, zu veranlassen, dass sich die erste Verbindungsfläche (W1c) und die zweite Verbindungsfläche (W2c) einander annähern und die erste Rückfläche (W1d) getrennt wird, und
wobei die Steuereinheit derart ausgebildet ist, dass, nachdem die erste Verbindungsfläche und die zweite Verbindungsfläche durch die Druckbeaufschlagungsmittel (5) mit Druck beaufschlagt worden sind, die Steuereinheit die Annäherungs- und Trenneinrichtung (9) veranlasst, die Druckbeaufschlagungsplatte von der ersten Rückfläche (W1d) zu trennen.

4. Vorrichtung zum Verbinden von Verbundmaterial nach Anspruch 3, weiter umfassend:
eine Transfereinrichtung, die ausgebildet ist, eine relative Position des Flächenheizelements (3) in Bezug auf das erste Verbundbauteil (W1) und auf das zweite Verbundbauteil (W2) zu verändern,
wobei die Steuereinheit derart ausgebildet ist, dass, nachdem die Druckbeaufschlagungsplatte durch die Annäherungs- und Trenneinrichtung (9) von der ersten Rückfläche (W1d) getrennt worden ist, die Steuereinheit ausgebildet ist, die Transfereinrichtung zu veranlassen, eine relative Position zwischen dem Flächenheizelement (3) und jedem des ersten Verbundbauteils (W1) und des zweiten Verbundbauteils (W2) zu verändern, und die Transfereinrichtung zu veranlassen, das Flächenheizelement (3) in die Einschubposition zwischen der ersten Verbindungsfläche (W1c) und der zweiten Verbindungsfläche (W2c) zu bewegen, die sich von der Position der ersten Verbindungsfläche (W1c) und der zweiten Verbindungsfläche (W2c), die mit Druck beaufschlagt werden, unterscheidet.

5. Vorrichtung zum Verbinden von Verbundmaterial nach Anspruch 2,
wobei die Druckbeaufschlagungsmittel (5) eine Druckbeaufschlagungsplatte einschließen, die vorgesehen ist, mit einer ersten Rückfläche (W1d) des ersten Verbundbauteils (W1), die eine Rückflächenseite der ersten Verbindungsfläche (W1c) ist, und/oder mit einer zweiten Rückfläche (W2d) des zweiten Verbundbauteils (W2), die eine Rückflächenseite der zweiten Verbindungsfläche (W2c) ist, in Kontakt zu sein.

6. Vorrichtung zum Verbinden von Verbundmaterial nach einem der Ansprüche 3 bis 5,
wobei die Druckbeaufschlagungsplatte (5) eine Temperatureinstelleinheit (15) einschließt, die ausgebildet ist, Erwärmung und/oder Kühlung durchzuführen.

7. Vorrichtung zum Verbinden von Verbundmaterial nach einem der Ansprüche 1 bis 6,
wobei das Flächenheizelement (3) entlang einer vorbestimmten einen Richtung der ersten Verbindungsfläche (W1c) und der zweiten Verbindungsfläche (W2c) vorgesehen ist.

8. Verfahren zum Verbinden von Verbundmaterial, umfassend: einen Erhitzungsschritt des Anordnens eines Flächenheizelements (3), das eine ebene Form aufweist, in eine Einschubposition zwischen einer ersten Verbindungsfläche (W1c) eines ersten Verbundbauteils (W1) und einer zweiten Verbindungsfläche (W2c) eines zweiten Verbundbauteils (W2), die der ersten Verbindungsfläche (W1c) zugewandt ist, sodass es parallel zu der ersten Verbindungsfläche (W1c) und zu der zweiten Verbindungsfläche (W2c) ist, und des Veranlassens, dass das Flächenheizelement (3) die erste Verbindungsfläche (W1c) und die zweite Verbindungsfläche (W2c) erhitzt;
einen Rückzugsschritt des Zurückziehens des Flächenheizelements (3) in eine Rückzugsposition, um aus der Einschubposition zurückgezogen zu werden; und
einen Verbindungsschritt des Veranlassens, dass sich die erste Verbindungsfläche (W1c) und die zweite Verbindungsfläche (W2c) einander annähern, und des Verbindens der ersten Verbindungsfläche (W1c) und der zweiten Verbindungsfläche (W2c) miteinander, wobei
das Flächenheizelement (3) eine Wärmeerzeugungseinheit (3a) aus Graphit und Isolierschichten (3b), die die Wärmeerzeugungseinheit (3a) zwischen sich aufnehmen und fixieren, einschließt.

## Revendications

1. Appareil de liaison de matériau composite (1) comprenant :
un élément chauffant en feuille (3) présentant une forme plane ;
un dispositif de déplacement de l'élément chauffant en feuille qui est configuré pour placer l'élément chauffant en feuille (3) à une position d'insertion entre une première surface de liaison (W1c) d'un premier organe en matériau composite (W1) et une seconde surface de liaison (W2c) d'un second organe en matériau composite (W2) faisant face à la première surface de liaison (W1c), de façon à être parallèle à la première surface de liaison (W1c) et à la seconde surface de liaison (W2c), et qui est configuré pour rétracter l'élément chauffant en feuille (3) vers une position de rétraction pour être rétracté depuis la position d'insertion ; et
une unité de commande qui commande le dispositif de déplacement de l'élément chauffant en feuille,
dans lequel l'unité de commande est configurée pour amener l'élément chauffant en feuille (3) à chauffer la première surface de liaison (W1c) et la seconde surface de liaison (W2c) à la position d'insertion, puis pour amener le dispositif de déplacement de l'élément chauffant en feuille à déplacer l'élément chauffant en feuille (3) vers la position de rétraction,
**caractérisé en ce que**
l'élément chauffant en feuille (3) inclut une unité génératrice de chaleur (3a) en graphite, et des couches isolantes (3b) qui prennent en sandwich et fixent l'unité génératrice de chaleur (3a).

2. Appareil de liaison de matériau composite selon la revendication 1, comprenant en outre :
des moyens de pressage (5) pour presser le premier organe en matériau composite (W1) et/ou le second organe en matériau composite (W2) dans une direction dans laquelle la première surface de liaison (W1c) et
la seconde surface de liaison (W2c) s'approchent l'une de l'autre,
dans lequel, après que l'élément chauffant en feuille (3) a été rétracté depuis la position d'insertion vers la position de rétraction, l'unité de commande amène les moyens de pressage (5) à presser la première surface de liaison (W1c) et la seconde surface de liaison (W2c).

3. Appareil de liaison de matériau composite selon la revendication 2,
dans lequel les moyens de pressage (5) incluent une plaque de pressage prévue pour être en contact avec une première surface arrière (W1d) du premier organe en matériau composite (W1) qui est un côté surface arrière de la première surface de liaison (W1c),
dans lequel l'appareil de liaison de matériau composite comprend en outre un dispositif de rapprochement et d'écartement (9) qui est configuré pour amener la première surface de liaison (W1c) et la seconde surface de liaison (W2c) à s'approcher l'une de l'autre et à se séparer de la première surface arrière (W1d), et
dans lequel l'unité de commande est configurée de telle sorte que, après que la première surface de liaison et la seconde surface de liaison sont pressées par les moyens de pressage (5), l'unité de commande amène le dispositif de rapprochement et d'écartement (9) à séparer la plaque de pressage de la première surface arrière (W1d).

4. Appareil de liaison de matériau composite selon la revendication 3, comprenant en outre :
un dispositif de transfert qui est configuré pour déplacer une position relative de l'élément chauffant en feuille (3) par rapport au premier organe en matériau composite (W1) et au second organe en matériau composite (W2),
dans lequel l'unité de commande est configurée de telle sorte que, après que la plaque de pressage est séparée de la première surface arrière (W1d) par le dispositif de rapprochement et d'écartement (9), l'unité de commande est configurée pour amener le dispositif de transfert à déplacer une position relative entre l'élément chauffant en feuille (3) et chacun du premier organe en matériau composite (W1) et du second organe en matériau composite (W2), et pour amener le dispositif de transfert à déplacer l'élément chauffant en feuille (3) vers la position d'insertion entre la première surface de liaison (W1c) et la seconde surface de liaison (W2c) qui est une position différente d'une position de la première surface de liaison (W1c) et de la seconde surface de liaison (W2c) qui sont pressées.

5. Appareil de liaison de matériau composite selon la revendication 2,
dans lequel les moyens de pressage (5) incluent une plaque de pressage prévue pour être en contact avec une première surface arrière (W1d) du premier organe en matériau composite (W1) qui est un côté surface arrière de la première surface de liaison (W1c) et/ou avec une seconde surface arrière (W2d) du second organe en matériau composite (W2) qui est un côté surface arrière de la seconde surface de liaison (W2c).

6. Appareil de liaison de matériau composite selon l'une quelconque des revendications 3 à 5,
dans lequel la plaque de pressage (5) inclut une unité d'ajustement de température (15) qui est configurée pour réaliser un chauffage et/ou un refroidissement.

7. Appareil de liaison de matériau composite selon l'une quelconque des revendications 1 à 6,
dans lequel l'élément chauffant en feuille (3) est prévu selon une direction prédéterminée de la première surface de liaison (W1c) et de la seconde surface de liaison (W2c).

8. Procédé de liaison de matériau composite comprenant : une étape de chauffage consistant à placer un élément chauffant en feuille (3) présentant une forme plane à une position d'insertion entre une première surface de liaison (W1c) d'un premier organe en matériau composite (W1) et une seconde surface de liaison (W2c) d'un second organe en matériau composite (W2) faisant face à la première surface de liaison (W1c), de façon à être parallèle à la première surface de liaison (W1c) et à la seconde surface de liaison (W2c), et à amener l'élément chauffant en feuille (3) à chauffer la première surface de liaison (W1c) et la seconde surface de liaison (W2c) ;
une étape de rétraction consistant à rétracter l'élément chauffant en feuille (3) vers une position de rétraction pour être rétracté depuis la position d'insertion ; et
une étape de liaison consistant à amener la première surface de liaison (W1c) et la seconde surface de liaison (W2c) à s'approcher l'une de l'autre, et à lier la première surface de liaison (W1c) et la seconde surface de liaison (W2c) l'une à l'autre, dans lequel
l'élément chauffant en feuille (3) inclut une unité génératrice de chaleur (3a) en graphite, et des couches isolantes (3b) qui prennent en sandwich et fixent l'unité génératrice de chaleur (3a).
